# EUROPEAN PATENT APPLICATION

(11) **EP 1 376 122 A1**
(43) Date of publication of application: **02.01.2004**
(21) Application number: 02291627.4
(22) Date of filing: 28.06.2002
(51) Int. Cl.: G01N 30/40, G01N 33/00

(54) **Sampler of volatile components**

(71) Applicant: ALPHA M.O.S., 31400 Toulouse (FR)
(72) Inventor: Ragazzo-Samchez, Juan, CP 63000, Tepic, Nayarit (MX); Baldet-Dupy, Philippe, 30470 Aimargues (FR); Ghommidh, Charles, 34980 Saint Gely du Fesc (FR); Chalier, Pascale, 34170 Castelnau Le Lez (FR); Deratani, André, 34170 Castelnau Le Lez (FR); Boulet, Jean-Claude, 11110 Vinassan (FR); Grenier, Pierre, 34000 Montpellier (FR); Persin, Michel, 34980 Saint Clement de Riviere (FR); Crouzet, Jean, 34090 Montpellier (FR); Chanie, Eric, 31450 Deyme (FR); Perrain, Aimé, 13670 Saint Andiol (FR)
(74) Representative: Thévenet, Jean-Bruno

(57) **Abstract**

A sampler of volatile components combines dehydration and alcohol-removal processes so as to provide a sample in which these products are substantially absent. Upstream of an odour analyzer, said volatile component sampler enables interference caused by water and ethanol to be avoided and enables improvements in the measurement sensitivity of the odour analyzer. The sampler comprises a chromatography column (COL) having a system (valve V2) for reversing the direction of flow in the column once water and alcohol molecules have left the column. The other volatile components are regrouped and output so as to be introduced later on into an odour analyzer. The basic system can be combined with pervaporation or solid-phase micro-extraction, so as to increase the concentration of the components of interest. Such hybrid systems can work on gas or liquid samples.

## Description

The present invention concerns the sampling of volatile components, notably upstream of an odour analyser. The odour analyzer can be a gas-sensor type analyser, an odour-sensor type analyser, an electronic nose, a gas spectrometer (optical spectrometer or mass spectrometer), a gas phase chromatography device, etc. It is to be understood that this list is not exhaustive. These analysers are used in a variety of applications including the detection of deficiencies in the odours aromas of drinks, perfumes, cosmetics, etc.

Developments tending to improve the performance of gas or odour analysers are being made in two main areas: with regard to the selective sensitivity of the detectors, and the methods used to sample the gaseous phase.

Certain studies propose to combine a gas phase chromatography device with an electronic nose, the electronic nose playing the part of an unconventional detector of the components separated out by the chromatography column. However, in such a case, the basic advantage of the electronic nose is lost, namely its ability to make a rapid analysis of volatile components taken as a whole. On the contrary, at best a downgraded system is obtained in which signals overlap in an uncontrolled way due to the significant response times of the MOS (metal-oxide semiconductor) sensor elements which are usually used in electronic noses. Moreover, using a conventional gas-phase chromatography system, the analysis of a complex headspace generally takes one hour.

During use of odour analysers, it has been found that the presence of alcohol and/or water in the sampled gaseous phase can mask other volatile components that it is desired to detect. Thus, it is preferable to pre-process the sample, to remove alcohol, before it is injected into the odour analyser.

Privat et al reviewed various different alcohol-removal techniques such as heat-based systems (distillation), adsorption methods (traps, apolar resins), membrane-based methods (inverse osmosis, pervaporation) and liquid-liquid extraction - see "Revue: techniques de désalcoolisation en vue de la discrimination de boissons alcoolisés par capteurs d'arômes", par E. Privat, S. Roussel, P. Grenier et V. Bellon-Maurel, Science des Aliments, 18(1998), 459-470. Adsorbent trap units are sometimes offered as an optional extra for use with electronic noses. The volatile components can be concentrated, for example, using a Tenax® trap, so as to lower the detection threshold of the electronic nose from the order of parts per million (ppm) to parts per billion (ppb).

It is an object of the present invention to provide a new sampler adapted to process sampled gaseous phases so as to reduce the quantity of problematic molecules they contain. These gaseous phases can be constituted by volatile components obtained from the headspace of a liquid or solid. Depending upon the application, the molecules to be removed can include water molecules, water and ethanol, ethanol, or indeed any problematic substance. For example, when volatile components of vinegars are analysed, it is appropriate to remove acetic acid.

According to the preferred embodiments of the invention, the sampler also increase the concentration of the volatile components of interest.

When the sampler of the present invention is coupled to an odour analyzer, it makes it easier for the odour analyzer to discriminate the aromatic properties of the sample.

The present invention provides a sampler comprising a gas-phase chromatography column, having a flow-reversal system, used in an unconventional manner. In effect, after the gas-phase sample has been injected in the chromatography column, and undesired molecules (such as water and alcohol molecules) have exited from the column, the direction of flow in the column is reversed so as to regroup the other volatile components. These regrouped volatile components are then output, so as to constitute a sample having a substantially-zero water and alcohol content (or substantially-zero content in terms of other undesired substances). The process implemented by the sampler can be designated a dynamic partial-separation via gas phase chromatography (GC).

Advantageously, the sampler is provided with a plurality of multi-way valves, preferably automated, which enable the sample undergoing analysis to be injected, the direction of flow in the column to be switched (designated in the present document as "Back-flush"), and the routing of the odour components to the output of the sampler to be accomplished (typically to an odour analyzer coupled downstream of the sampler).

In the present invention, back-flush is not used in the usual way for cleaning chromatography columns, but is transformed into a tool for preparing the sample.

The sampler according to the invention enables selective separation out of ethanol and water, or any other undesired substance, while maintaining the other volatile components in a group. This sampler can also be used for liquid-phase samples. yso

According to a first preferred embodiment of the invention, in the sampler, a process of permeation through a membrane (pervaporation, gas permeation, inverse osmosis, etc.), used in the gas phase or liquid phase, is associated with the chromatography column having a reverse-flow system. Thus, in addition to enabling a gaseous product or the headspace of a liquid product to be dehydrated and freed from alcohol, this sampler enables the concentration of volatile components in such a gaseous product or headspace to be increased.

According to a second preferred embodiment of the invention, in the sampler a SPME (Solid Phase Micro-Extraction) process is associated with the chromatography column having a reverse-flow system. This hybrid sampler enables a gaseous product or the headspace of a liquid or solid product to be dehydrated, freed from alcohol and have an increase in concentration of its volatile components.

The present invention also provides an odour analysis system comprising a sampler according to the invention, coupled to an odour analyzer. Preferably, the odour analyzer is an electronic nose.

By combining dehydration, removal of alcohol, and increase in concentration, the sampler of volatile components according to the invention located upstream of the odour analyzer enables interference caused by water and ethanol to be avoided and enables the measurement sensitivity of the odour analyzer to be increased. It also enables samples to be characterized more rapidly (the first analysis can take ten minutes or so, then the subsequent analyses can follow on at intervals of only a few minutes).

Other features and advantages of the present invention will become apparent from the following description of preferred embodiments thereof, given by way of example, and illustrated by the accompanying drawings, in which:
Fig.1 is a diagram indicating the main elements of an odour analysis system according to the invention;
Fig.2 is a diagram to illustrate the operation of the system of Fig.1;
Fig.3 is a photograph of an example of the odour analysis system of Fig.1;
Fig.4 is a timing chart of operations performed in the system of Fig.1;
Fig.5 is a diagram showing the combination of processes of pervaporation and SPME with the system of Fig.1 which puts into practice a dynamic partial separation via a GC column;
Fig.6 is a diagram showing the main elements of a hybrid sampler according to a first preferred embodiment of the invention;
Fig.7 is a diagram showing the main elements of a hybrid sampler according to a second preferred embodiment of the invention;
Fig.8 is a graph for comparing odour analyzer sensor signals obtained using different embodiments of the invention; and
Fig.9 is a graph for comparing the results of a principal components' analysis performed using different embodiments of the invention.

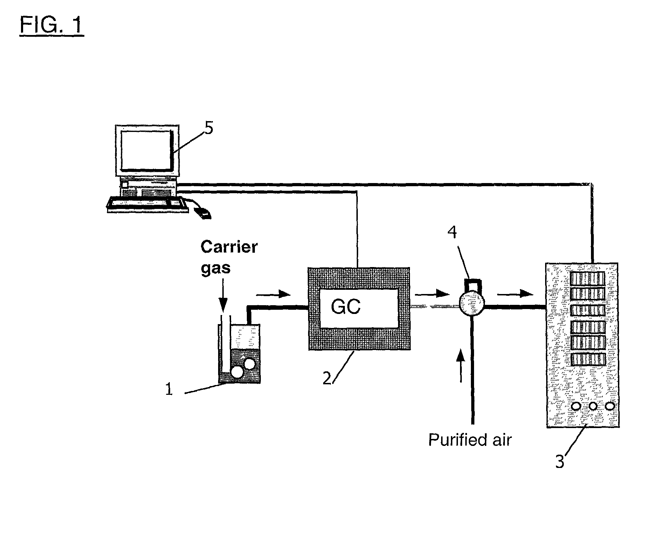

The basic features of the sampler according to the present invention will be understood from the following description of an odour analysis system according to the invention, given with reference to Figs.1 to 5.

As can be seen in Fig.1, the odour analysis system according to the invention comprises a "sample preparation section" 1, a "chromatography" section 2, an odour analyzer 3, a valve 4 or other means for coupling the "chromatography" section 2 to the odour analyzer 3, and control means 5 (typically a suitably-programmed general-purpose computer).

**Odour analyzer:** according to the present example, the sampler of the invention is used in association with an electronic nose of the Fox 4000 type marketed by Alpha MOS. The apparatus is provided with three chambers each having 6 metal-oxide sensors, thus providing 18 sensors. The air used by the apparatus is purified using a Whatman filter and dehydrated by passing it over a silica gel column.

**"Chromatography" section:** The sampler of the present invention comprises at least a gas chromatography column having a system enabling the direction of flow in the column to be reversed. It is convenient to use a gas chromatography column having three automatic, multi-way rotary valves enabling the sample for analysis to be introduced, the direction of flushing of the chromatography column to be switched (Back-flush), and the routing of the odour components towards the electronic nose (or other odour analyzer) 3 to be achieved. These rotary valves can be, for example, valves manufactured by Rheodyne. Control of the operating conditions can be made more rigorous by providing the apparatus with a mass flow control device so that the flow of the carrier gas can be managed in an optimal manner.

**"Sample preparation" section:** The arrangement of this section of the system varies depending upon the nature of the gas phase under consideration. In general, sample preparation techniques known in the field of odour analysers can be used.

Typically, when the odour of a liquid product is to be analysed, a sample (for example 10ml) of the liquid is placed in a 25ml glass beaker. A magnetic stirrer can be used to render the sample uniform. The temperature of the liquid sample can be controlled to within ±0.1°C by a heating unit. Other temperature control means can be used, for example, the glass beaker can be held in a thermostatically-controlled bath.

The headspace above the liquid sample becomes saturated with the volatile components given off by the sample (which form the odour or aroma of the sample). A carrier gas (for example air, nitrogen, hydrogen, or any other appropriate gas), regulated by a mass/flow-rate controller, can be used to transport the headspace towards the chromatography section. However, it is preferable that the method used to sample the headspace should not introduce a significant quantity of air or nitrogen into the sample (this would dilute the sample). The head-space sampling is interrupted in-between two analyses of the same liquid sample, in order to enable an equilibrium to be re-established between the liquid and gas phases, and prevent the most volatile components from being swept away. Thus, of the order of ten analyses can be performed of the same sample without any significant change in the composition of the headspace.

The pipe downstream of the beaker, along which the sample passes, is heated so as to avoid condensation. The liquid sample is brought to the correct temperature in about 4 minutes, while the preceding analysis is being performed. Thus, sample preparation need not introduce any hold-ups in the procedure.

**Control means/computer:** Preferably, all of the operations (sample preparation, control of the mass/flow-rate controllers, switching of the valves, detection by the Fox4000 electronic nose, saving of data...) are controlled by a computer or the like. One example has used a PC running Microsoft Windows®, having a multi-way interface card, and programmed using a program developed in the graphic language LabView®.

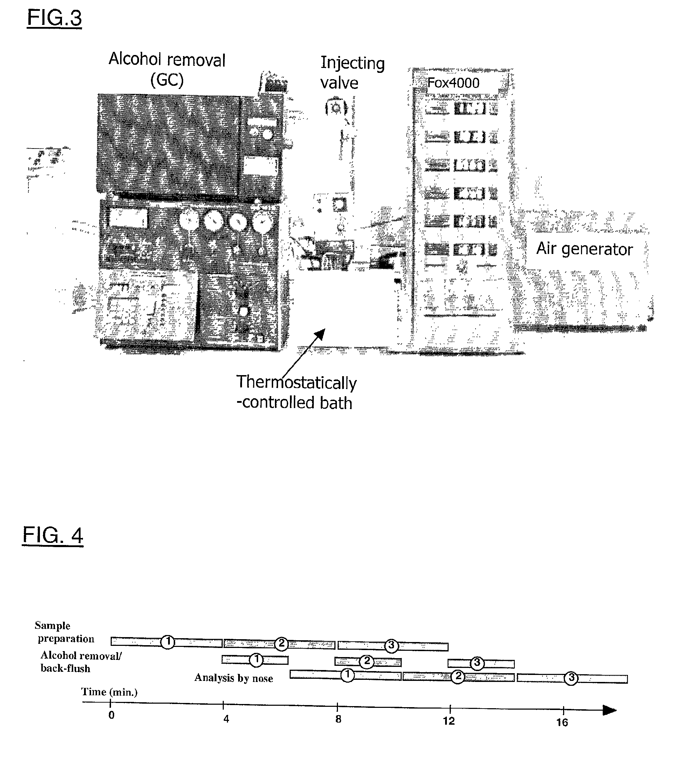

Operation of the analysis system of Fig.1 will now be described with reference to Fig.2. In this example, the gaseous phase to be analysed consists of the headspace of a liquid containing water and ethanol.

In a first stage, the gaseous phase to be analysed is supplied to the chromatography column. This is achieved by filling the external loop B of a rotary valve V1 (termed the "injecting valve") with the gaseous phase that is in equilibrium with the liquid sample and has been transported by, for example, dry air whose flow rate is controlled by a mass/flow-rate controller DM2. A carrier gas (for example nitrogen, or helium, hydrogen, or any other appropriate gas generally used to supply chromatography columns) is also injected in the valve in order to supply the chromatography column. The flow-rate of this carrier gas is controlled by a mass/flow-rate controller DM1. The valve V1 is switched so as to bring port 3 into contact with port 4, and port 1 into contact with port 2. Thus, the sample is input at port 1 of the back-flush valve V2 and passes through the chromatography column COL.

In alcoholic drinks, water and ethanol are by far the majority components in the headspace and can be separated out by chromatography. Because of their very low molecular mass they are the components of interest that are the most rapidly eluted. They exit via port 3 of the valve V2 towards a third valve, V3. It should be noted that certain small molecules, such as acetaldehyde, methanol or methanal, having shorter retention times in the column than ethanol, are also eliminated.

When the ethanol peak has exited, the direction of flow of the carrier gas is reversed by switching the valve V2. The volatile components, which were in the process of separating out in the column, then travel in the reverse direction and group together progressively. They are regrouped to form a single, although broadened, peak.

At that point in time, the third valve V3 is switched so as to sample the gases leaving the chromatography column and to inject them into the electronic nose (or other odour analyser) 3. The sample is carried to the odour analyser in an air flow provided by an air generator GEN (shown in Fig.3). However, the valve V3 could be used in a different manner, by diverting towards the nose the totality of gases leaving the GC column. A simple three-way valve would then be sufficient.

The presence of the chromatography detector FID (a flame ionisation detector) is not strictly necessary, but helps in adjusting the apparatus (determining the optimal duration of the back-flush, in particular). According to a variant, this detector can be omitted and the electronic nose can be used as detector during the setting-up phase.

The injector INJ shown in Fig.2 is the injector of the chromatography device. The presence of this element is not essential. However, it enables the system to be used for analysis of samples that are input to the chromatography device by direct injection, for example using a syringe.

In this example, the three valves, V1 to V3 are all three-way rotary valves. However, it should be noted that the invention is not limited to this configuration, other configurations of valves (preferably multi-way valves) are possible.

Fig.3 is a photograph showing an example of implementation of the system of Fig.1. in this example, the sample temperature is regulated using a thermostatically-controlled bath.

The stages of sample preparation (introduction of the sample and bringing it to the correct temperature), dehydration/alcohol removal by Back-flush, and detection by the electronic nose, follow-on from each other without wasted intervals, as can be seen from the timing diagram of Fig.4. The circled numerals indicate the number of the sample which is being processed. The first analysis is completed in about 10 minutes, then subsequent analyses are completed every 4 minutes after that. By optimizing each stage, this time-period could be reduced and probably brought under 3 minutes per analysis.

The above-described sampler outputs a sample of volatile components which is substantially free of alcohol and water. The combination of the sampler with an odour analyzer (whether an electronic nose, as in the above example, or another kind of apparatus) constitutes what can be called the "basic analysis system". This system implements a dynamic, partial separation via GC column.

The combination of this basic analysis system with other devices can enable overall performance improvements to be obtained. For example, the dehydration/alcohol removal stage could be preceded by a stage where the concentration of the volatile components is increased. This can be achieved using a variety of techniques such as permeation through a membrane (preferably, a pervaporation process), or adsorption-release on adsorbent polymers, for example Tenax®, or polydimethylsiloxane, which are used for certain SPME fibres. The combination of permeation through a membrane with back-flush constitutes a first preferred embodiment of the invention. The combination of SPME with back-flush constitutes a second preferred embodiment of the invention.

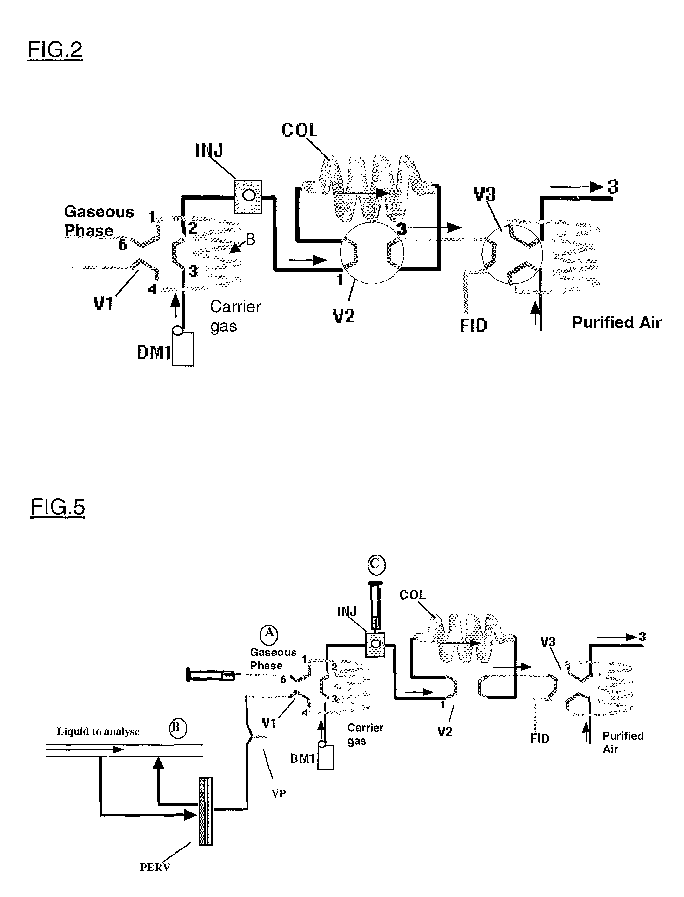

Fig.5 illustrates the principle of combining pervaporation (B) or SPME (C) with the dynamic, partial separation via GC column - the latter basic analysis system corresponds to (A) in Fig.5. With pervaporation, a unit containing the pervaporation membrane MEM is connected in place of the "sample preparation section" of the basic analysis system. Instead of "pushing" the gas to be analysed, it is sucked out using a glass syringe (which is heated to avoid condensation). The injection of the gas is then implemented by pushing the pervaporated gaseous volume, once the pervaporation cell has been disconnected. The valve V1 is switched, as in the basic analysis system, so as to send the sample to port 1 of the valve V2.

With SPME (C), the sample is introduced directly into the manual injector INJ (which is heated to 200°C) located upstream of the valve V2.

After the sample has been supplied to the valve V2, the analysis proceeds in the same way as before and includes, in both of the "hybrid" cases, the dehydration/alcohol removal stage.

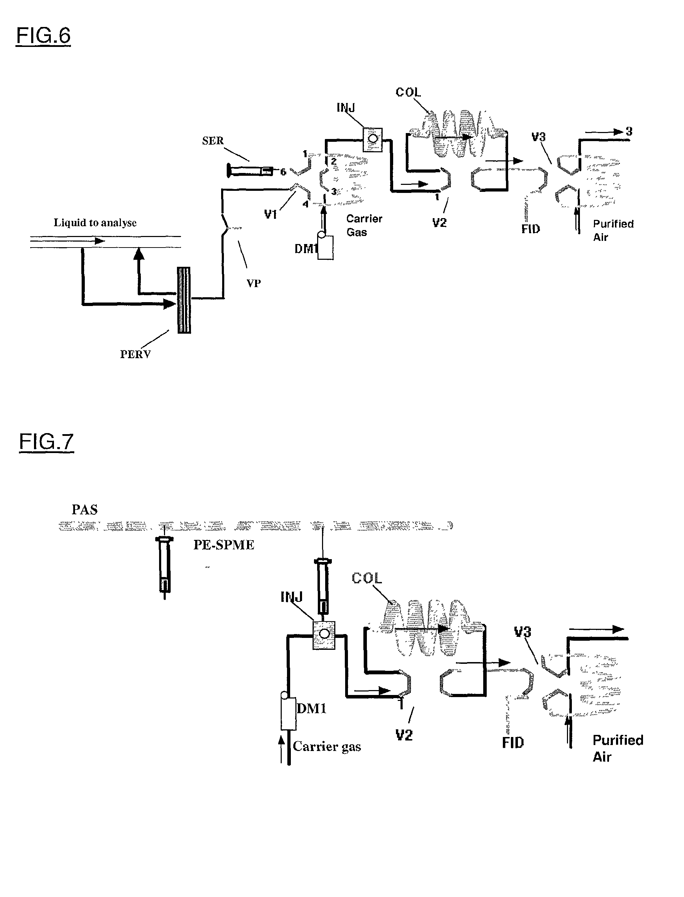

An example of the implementation of the first preferred embodiment of the invention will now be described in greater detail, with reference to Fig.6. In this example, pervaporation is the process of permeation through a membrane that is used.

The aim of pervaporation is to concentrate odours with a selectivity which depends upon the nature of the membrane that is used. The liquid sample (for example, wine) is heated and pumped towards the pervaporation cell. The volatile organic components are made to pass through the pervaporation membrane PERV by creating a vacuum using a (100ml) gas syringe SER. Once the syringe is filled, its contents are injected into the sampling loop.

In a first stage, the syringe (or other suitable means) creates a lowered pressure which enables the volatile components to pass through the membrane, and causes a relative increase in the concentration of odour components. Depending upon the nature of the membrane, the pervaporation process can be more or less selective. Next, the pervaporation valve VP is switched, and the syringe plunger is pushed so as to fill the sampling loop. The sampling valve V1 is next switched so as to introduce the sample into the valve V2. The analysis process then continues as described above. The pervaporation can relate to a single sample, or to a continuous source of liquid as shown in Fig.6.

An example of the implementation of the second preferred embodiment of the invention will now be described in greater detail, with reference to Fig.7. in this example, the sampler includes means implementing an SPME process. Similarly to pervaporation, SPME concentrates the volatile organic components. However, in this case, there are two equilibria to consider, the gas-liquid equilibrium and a gas-solid equilibrium (between the gas phase undergoing analysis and the SPME fibre onto which components are adsorbed). Tests were made where the gas-solid equilibrium had different durations and an appropriate value was found to be 15 minutes. Once the fibre has become loaded with volatile organic components, these are caused to be released into the injector INJ of the back-flush unit.

The SPME fibre can be carried by a syringe, or a special sampling piston (PE-SPME). Conventionally, the fibre is introduced into the head space of the sample to be analysed, and there is a waiting time (of from 1 to 15 minutes) to enable the equilibrium between the phases to be established. The sample adsorbed onto the SPME fibre is then introduced directly to the injector of the chromatography unit (thermal release). A carrier gas (for example, nitrogen) transports the sample towards the valve V2. The flow rate of the carrier gas is regulated by a mass/flow-rate controller DM1. The analysis then continues as described above. There is no longer any need for the injection valve V1 and the system can be simplified. Advantageously, the syringe PE-SPME forms part of an automated system comprising a sample conveyor PAS (not shown).

### Results obtained via combined processes

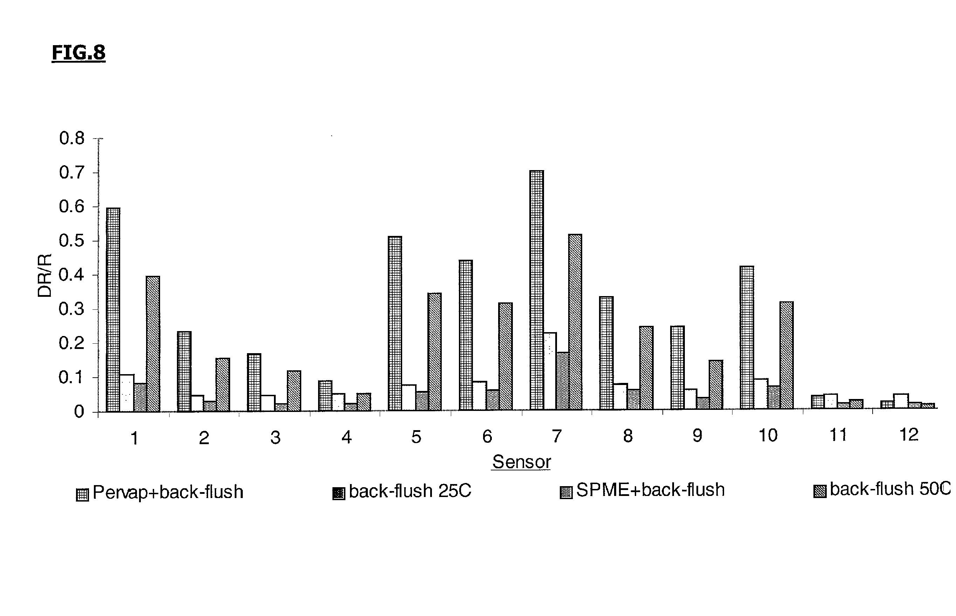

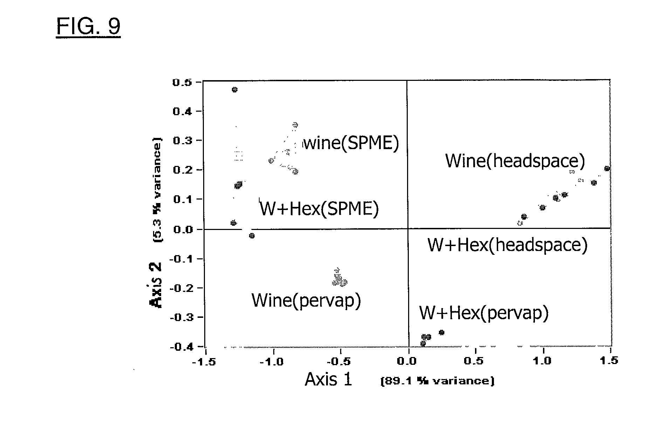

By way of example, Figs.8 and 9 show the results of multiple tests combining SPME or pervaporation with the basic analysis system. These experiments were conducted using samples of natural (Fig.8) or artificial (Fig.9) wines enriched in hexanol to the extent of 4mg/l. The same wines were analysed by automatic injection into the basic analysis system.

Fig.8 shows an example of normalized signals DR/R obtained from 12 sensors of a Fox-type electronic nose working on a reference wine. Fig.8 shows a comparison between automatic injection into the basic back-flush system with sample heated to 50°C and 25°C (diagonally-striped columns and dotted columns, respectively, in the drawing), manual injection in a combined pervaporation-back-flush system with the sample heated to 50°C (checkered columns), and manual injection in a combined SPME-back-flush system with the sample heated to 50°C (plain columns).

Fig.9 shows the results of a Principal Components' Analysis (PCA) and represents the discrimination of the presence of hexanol in an artificial wine. In this graph there is a comparison between three sampling techniques: the basic analysis system (called "headspace" in Fig.9), combination of this basic analysis system with SPME (called "SPME" in Fig.9), and combination of this basic analysis system with pervaporation (called "pervap" in Fig.9). It can be seen from Fig.9 that combination of SPME or pervaporation with the basic analysis system significantly improves the detection of defects in the wine, taking as our example hexanol at the threshold of detection of defects by a human taster.

The signal obtained by combining SPME with the basic analysis system is approximately 30% weaker than that obtained by direct injection of 1ml of headspace in the basic analysis system on its own. Despite the fact that, in terms of weighting, SPME leads to a signal of lower amplitude (Fig.8), the discrimination obtained with an electronic nose is improved compared with the basic analysis system (Fig.9). This shows the usefulness of the combination involving SPME.

Pervaporation leads to a gaseous fraction which is enriched in aromatic components, but also in alcohol. This process is rendered useful by virtue of the fact that ethanol is separated from the aromatic components by the basic system. There is a synergy between the combined processes.

It will be noted from Fig.9 that using pervaporation the measurements are closer together, which suggests that the combination involving pervaporation improves repeatability of measurements. This feature underlines once again the synergy that exists between the combined processes, leading to improved measurement.

Despite the fact that the above description of the invention is given in terms of specific embodiments of the invention, the invention is not limited by the detailed features of the embodiments. On the contrary, numerous modifications and adaptations can be made to the above-described embodiments while still remaining within the scope of the annexed claims.

For example, the gaseous phase that it is desired to analyse can be derived from a gaseous, liquid or solid sample. Clearly, the sample preparation will be different for each case.

As has already been mentioned, the sampler of the invention can be used in association with odour analysers other than electronic noses. If an electronic nose is used, the number and nature of the sensors can be different from those in the above-mentioned examples.

## Claims

1. Sampler having a gas chromatography column (COL), and comprising:
input means (1) for acquiring a sample in a gaseous phase;
means (V1) for introducing the sample into the gas chromatography column (COL); and
means (V2) for reversing the direction of flow in the chromatography column (COL);
**characterized in that** it comprises:
control means for reversing the direction of flow in the chromatography column (COL) after exit of molecules of at least one predetermined component but when molecules of mass greater than the mass of said exiting molecules remain in the column; and
output means (V3) for outputting said molecules of greater mass.

2. Sampler according to claim 1, and comprising a plurality of multi-way valves (V1-V3) enabling the sample to be analysed to be introduced in the gas chromatography column (COL), the switching of the direction of flow in the column, and the routing of said molecules of greater mass towards the output.

3. Sampler according to claim 1 or 2, wherein the input means comprises means (PERV) implementing a pervaporation process.

4. Sampler according to claim 1 or 2, wherein the input means comprises means (PE-SPME) implementing a solid-phase micro-extraction process.

5. Sampler according to any previous claim, wherein said molecules of at least one predetermined component comprise water molecules.

6. Sampler according to any previous claim, wherein said molecules of at least one predetermined component comprise ethanol molecules.

7. Odour analysis system, comprising a sampler according to any previous claim and an odour analyzer (3) arranged to receive as an input the molecules output by the output means of the sampler.

8. Method of processing a gas-phase sample, **characterized in that** it comprises the steps of:
introducing the sample into a gas chromatography column (COL);
outputting towards a first output molecules of at least one predetermined component;
reversing the direction of flow in the chromatography column (COL) after the exit from the column of said molecules of at least one predetermined component but when molecules of mass greater than the mass of said exiting molecules remain in the column; and
outputting said molecules of greater mass towards a gas analyzer (3).

9. Processing method according to claim 8, and comprising a pervaporation stage (PERV) for providing a sample of increased concentration for introduction into the chromatography column (COL).

10. Processing method according to claim 8, and comprising a solid-phgase micro-extraction stage (PE-SPME) for providing a sample of increased concentration for introduction into the chromatography column (COL).

11. Processing method according to claim 8, 9 or 10, wherein said molecules of at least one predetermined component comprise water molecules.

12. Processing method according to claim 8, 9, 10 or 11, wherein said molecules of at least one predetermined component comprise ethanol molecules.

13. Processing method according to any one of claims 8 to 12, wherein the step of output towards a gas analyzer (3) consists in the output of said molecules of greater mass towards an electronic nose.

14. Method of detecting defects in odours, **characterized in that** it comprises a sample processing method according to any one of claims 8 to 13.
